## Europäisches Patentamt

## European Patent Office

## Office européen des brevets

(19)

(11) Veröffentlichungsnummer: **0 315 804**
**B1**

(12) **EUROPÄISCHE PATENTSCHRIFT**

(45) Veröffentlichungstag der Patentschrift:
08.08.90

(21) Anmeldenummer: 88117385.0

(22) Anmeldetag: 19.10.88

(51) Int. Cl.⁵: **B60K 13/04**, F01N 7/18,
F16L 55/02

(54) Aufhängeöse für eine Abgasanlage eines Kraftfahrzeuges.

(30) Priorität: 09.11.87 DE 3737987

(43) Veröffentlichungstag der Anmeldung:
17.05.89 Patentblatt 89/20

(45) Bekanntmachung des Hinweises auf die Patenterteilung:
08.08.90 Patentblatt 90/32

(84) Benannte Vertragsstaaten:
ES FR GB IT

(56) Entgegenhaltungen:
DE-A- 1 505 498
DE-A- 1 729 607
DE-A- 3 104 709
DE-B- 2 658 358
US-A- 4 078 443
US-A- 4 415 391

(73) Patentinhaber: WEGU Gummi- und Kunststoffwerke
Walter Dräbing KG, Mündener Strasse 31,
D-3500 Kassel(DE)

(72) Erfinder: Dräbing, Walter, Am Schnepfenbusch 10,
D-3501 Niestetal(DE)
Erfinder: Fiedler, Kurt, Raiffeisenstrasse 1,
D-3501 Zierenberg(DE)

(74) Vertreter: Rehberg, Elmar, Dipl.-Ing., Postfach 3162 Am
Kirschberge 22, D-3400 Göttingen(DE)

ACTORUM AG

**Beschreibung**

Die Erfindung bezieht sich auf eine zwei Aufhängepunkte aufweisende Aufhängeöse für eine Abgasanlage eines Kraftfahrzeugs, mit einem Schlaufenkörper aus Elastomerwerkstoff und einer in sich geschlossenen, in der Ebene des Schlaufenkörpers elastisch verformbaren Einlage, die eine zumindest rhombusähnliche Ausgangsform besitzt. Solche Aufhängeösen werden meist zu mehreren zwischen dem Boden eines Kraftfahrzeugs und einer Auspuffanlage eingesetzt. Sie dienen dazu, die beiden miteinander verbundenen Körper gegen Körperschall zu isolieren und die Auspuffanlage begrenzt federnd nachgiebig aufzuhängen.

Eine Aufhängeöse der eingangs beschriebenen Art ist aus der DE-AS 26 58 358 bekannt. Diese weist einen Schlaufenkörper aus gummiartigem Material auf, der in seinem mittleren Bereich von Stegen durchsetzt ist. Der äußere Bereich des Schlaufenkörpers besitzt etwa ringförmige, rhombusähnliche Gestaltung. Im übrigen weist der Schlaufenkörper zwei bogenförmig verlaufende Schlitze auf, die zwei Aufhängepunkte bilden und an denen einerseits ein Haken, der am Boden des Kraftfahrzeugs befestigt ist und andererseits ein weiterer Haken, der an der Abgasanlage befestigt ist, eingehängt werden. Etwa in der Mitte des Querschnitts des äußeren ringförmigen Teils des Schlaufenkörpers ist eine in sich geschlossene, in der Ebene des Schlaufenkörpers elastisch verformbare und zugfeste Einlage eingebettet, die aus einem Stahldraht oder einem Federstahlband bestehen kann. Diese Einlage besitzt ebenfalls rhombusähnliche Ausgangsform. Bei Beanspruchung verformt sich der Schlaufenkörper zusammen mit der Einlage, wobei der zulässige Federweg durch eine gestreckte Lage der zugfesten Einlage im Sinne eines Anschlags begrenzt wird. Damit wird eine progressive Kennlinie des Schlaufenkörpers bei Auslenkung angestrebt. Sowohl der Schlaufenkörper aus Elastomerwerkstoff wie auch die Einlage übernehmen über den gesamten zulässigen Bewegungsbereich bei entsprechender Auslenkung der Abgasanlage Kräfte und wirken daher von Anfang an zusammen. Damit ist es zwar möglich, eine gewisse Progressivität zu erreichen. Nachteilig ist jedoch, daß infolge der zugfesten Ausbildung der Einlage, also der Verwendung eines insoweit starren Stahldrahts in der gestreckten Form ein sehr abrupt einsetzender Anschlag gebildet ist, der jede weitere Ausfederung begrenzt. Zudem ist die Einlage etwa in der Mitte des ringförmigen Bereichs des Schlaufenkörpers und damit in entsprechender Entfernung von den schlitzförmigen Aufhängepunkten angeordnet, wobei der Zwischenraum mit Elastomerwerkstoff ausgefüllt ist. Diese Bereiche des Schlaufenkörpers werden in der gestreckten Lage der Einlage erheblich auf Druck belastet, weil die Einlage zugfest ausgebildet ist. Damit besteht die Gefahr, den Elastomerwerkstoff in diesen Bereichen übermäßig zu beanspruchen. Beim Einfedern ist die Einlage, abgesehen von Biegekräften, weitgehend frei und die entsprechenden Kräfte werden durch Stege an dem Schlaufenkörper aufgenommen. Die Stege können umgekehrt auch miteinander einen Anschlag bilden, um die Einfederbewegung zu begrenzen. Die zugfest ausgebildete Einlage, die auch aus einem Stahlseil bestehen kann, ist somit selbst nicht dehnfähig und besteht auch nicht aus federnd-nachgiebigem Material. Mit ihrer Biege-Verformbarkeit verstärkt sie an sich nur den Schlaufenkörper aus Elastomerwerkstoff von Anfang an und stellt im übrigen einen schlagartig einsetzenden Anschlag am Ende der Ausfederbewegung des Schlaufenkörpers dar.

Der Erfindung liegt die Aufgabe zugrunde, eine Aufhängeöse der eingangs beschriebenen Art derart weiterzubilden, daß bei kleinen Ausfederbewegungen eine relativ weiche Aufhängung bei guter Schwingungsisolierwirkung erreicht wird, während im Bereich größerer Auslenkungen eine größere Progressivität der Kennlinie erzielt wird, also die Federung erheblich härter wird, bis letztendlich der maximale Federweg erreicht wird.

Erfindungsgemäß wird dies dadurch erreicht, daß die Einlage aus dehnfähigem, federnd-nachgiebigem Material besteht, daß in dem Schlaufenkörper zwei Buchsen eingebettet sind, und daß sich die in dem Schlaufenkörper angeordnete Einlage unmittelbar an den Buchsen abstützt. Wesentlich ist, daß die Einlage nicht mehr aus zugfestem, lediglich in der Ebene der Schlaufe elastisch verformbarem Material besteht, sondern daß dehnfähiges, federnd-nachgiebiges, also in sich elastisches Material auch für die Einlage verwendet wird. Dieses andere Material gestattet es, daß die Einlage nicht wie bisher auf Biegung beansprucht wird - abgesehen von ihrer Anschlagfunktion -, sondern daß bei kleinen Ausfederungen die Einlage auch frei von nennenswerten Biegekräften bleibt, so daß im Bereich dieser kleinen Auslenkungen allein die Eigenschaften des Schlaufenkörpers aus Elastomerwerkstoff zur Anwendung kommen. Diese Federung ist in diesem Anfangsbereich somit besonders weich und somit schall- und schwingungsisolierend. Obwohl die Einlage von Anfang an neben dem Schlaufenkörper vorgesehen ist, setzt ihre kraftmäßige Wirkung praktisch erst im Übergangsbereich zwischen kleinen und großen Ausfederungen ein, d. h. die Einlage schafft einen kraftmäßigen Freiraum für kleine Ausfederbewegungen, in welchem sie nicht bzw. praktisch nicht zur Wirkung kommt. Dafür setzt aber ihre kraftmäßige Wirkung am Übergangspunkt zu großen Ausfederungen ein, so daß die Federkennlinie in diesem Bereich gleichsam einen Übergangsknick bekommt, von dem aus sich eine wesentlich gesteigerte Progressivität ergibt. Wichtig ist zu erkennen, daß zu diesem Übergangszeitpunkt nicht bereits der Federweg durch einen mechanisch wirkenden Anschlag begrenzt ist, sondern daß jetzt bei der Dehnung der Einlage an sich erst der progressive Teil der Federkennlinie auftritt. In diesem Bereich wird also die Federung sehr hart und setzt bei immer größer werdenden Ausfederungen erhebliche Rückstellkräfte entgegen. Dabei wird die Einlage aus der gestreckten Lage heraus verlängert und gedehnt. Das Material der Einlage besitzt also selbst einen nennenswerten Federweg und weist auch ein beachtliches Rückstellvermögen auf, so daß in diesem Bereich kein fester Anschlag gebildet wird. Auf einen festen Anschlag wird gleichsam bei der neuen Aufhängeöse verzichtet, was infolge der starken Progressivität möglich ist. Der Schlaufenkörper und die Einlage sind dabei so ausgelegt und dimensioniert, daß die maximale Betriebslast zwischen den Aufhängepunkten und damit die zulässige Zugbeanspruchung in dem Material nicht überschritten werden. Wichtig ist auch die Anordnung der Buchsen in dem Schlaufenkörper, und zwar in zweifacher Hinsicht. Einerseits bilden diese Buchsen beanspruchungsgerechte Aufnahmestellen zur Aufnahme von stiftförmigen Haken an dem Boden des Kraftfahrzeugs einerseits und an der Auspuffanlage andererseits, und zwar, ohne daß die Gefahr besteht, daß durch das Einbringen dieser stiftförmigen Haken der Schlaufenkörper aus elastischem Material eingerissen oder sonstwie beschädigt wird. Zum anderen dienen diese Buchsen als unmittelbarer Kraftangriff für die Einlage im Bereich größerer Ausfederungen. Bereiche von Elastomerwerkstoff, die dabei unter Druck übermäßig beansprucht werden könnten, werden vermieden.

Die Einlage kann aus einer insbesondere mehrlagigen Fadenschlinge bestehen, also aus einem Faden, der mehrfach um die Aufhängepunkte an den Buchsen herumgeschlungen ist. Damit wird gleichsam ein Fadenschlingenpaket gebildet, welches einerseits ausreichend nachgiebig elastisch und andererseits entsprechend verstärkend ausgebildet werden kann.

Der Schlaufenkörper und die Einlage können Federwege in ähnlicher Größenordnung aufweisen. Damit ist eine deutliche Abgrenzung gegenüber einer zugfesten Einlage erreicht, die praktisch keinen nennenswerten Federweg besitzt. Dadurch, daß die Federwege etwa in der gleichen Größenordnung liegen, bekommt die Federkennlinie zwei deutlich und tendenzmäßig voneinander getrennte Bereiche, die durch einen Übergangsbereich miteinander verbunden sind. Im unteren Bereich besitzt die Kennlinie eine kleine und im oberen Bereich eine große Steigung.

Die Fadenschlinge kann aus einem federnd-nachgiebig gemachten Faden aus natürlichen Stoffen wie Baumwolle, Seide o. dgl. und/oder aus Kunststoff bestehen. Wichtig ist nur, daß der Faden so ausgerüstet werden muß, daß er selbst federnd-nachgiebig wird.

Die Aufhängeöse ist zweckmäßig als gespritzter Formkörper ausgebildet und weist eingelegte und umspritzte Rohelastomerwerkstücke auf. Diese Rohelastomerstücke dienen zur Fixierung der rhombusähnlichen Ausgangsform der Einlage in der unbelasteten Stellung.

Ein Verfahren zur Herstellung einer zwei Aufhängepunkte aufweisenden Aufhängeöse wendet eine Spritzform an und kennzeichnet sich erfindungsgemäß dadurch, daß in die Spritzform zwei Buchsen lagestabil eingebracht werden, daß die Einlage über die Buchsen gelegt und mit mindestens einem ebenfalls in die Spritzform einzulegenden Rohelastomerkörper in die rhombusähnliche Ausgangsform aufgespreizt wird, und daß die eingelegten Teile mit Elastomerwerkstoff umspritzt werden. Obwohl das Material der Einlage an sich wenig formstabil ist, wird die rhombusähnliche Ausgangsform dadurch gesichert und erreicht, daß die Einlage zwischen den Buchsen und einem eingelegten Rohelastomerkörper entsprechend aufgespreizt bzw. aufgespannt wird, bevor das Einspritzen des restlichen Elastomerwerkstoffs in die Spritzform erfolgt. Es versteht sich, daß anschließend eine Vulkanisierung in der Form angeschlossen wird, wenn z. B. Gummi als Elastomerwerkstoff eingesetzt wird.

Zusätzlich können Seitendeckteile aus Rohelastomerwerkstoff in die Spritzform eingelegt werden, damit die Einlage bei ihrer Einbringung in die Spritzform nicht nur in Richtung der Ebene der Aufhängeöse aufgespreizt wird, sondern auch noch in der Richtung senkrecht dazu gehalten und gelagert ist. Die Einlage erhält damit ihren symmetrischen Sitz innerhalb des Schlaufenkörpers.

Die Erfindung wird anhand einer bevorzugten Ausführungsform weiter verdeutlicht und beschrieben. Es zeigen:

Figur 1 eine Stirnansicht der Aufhängeöse,
Figur 2 eine Seitenansicht der Aufhängeöse gemäß Figur 1, teilweise geschnitten und
Figur 3 ein Kennliniendiagramm dieser Aufhängeöse.

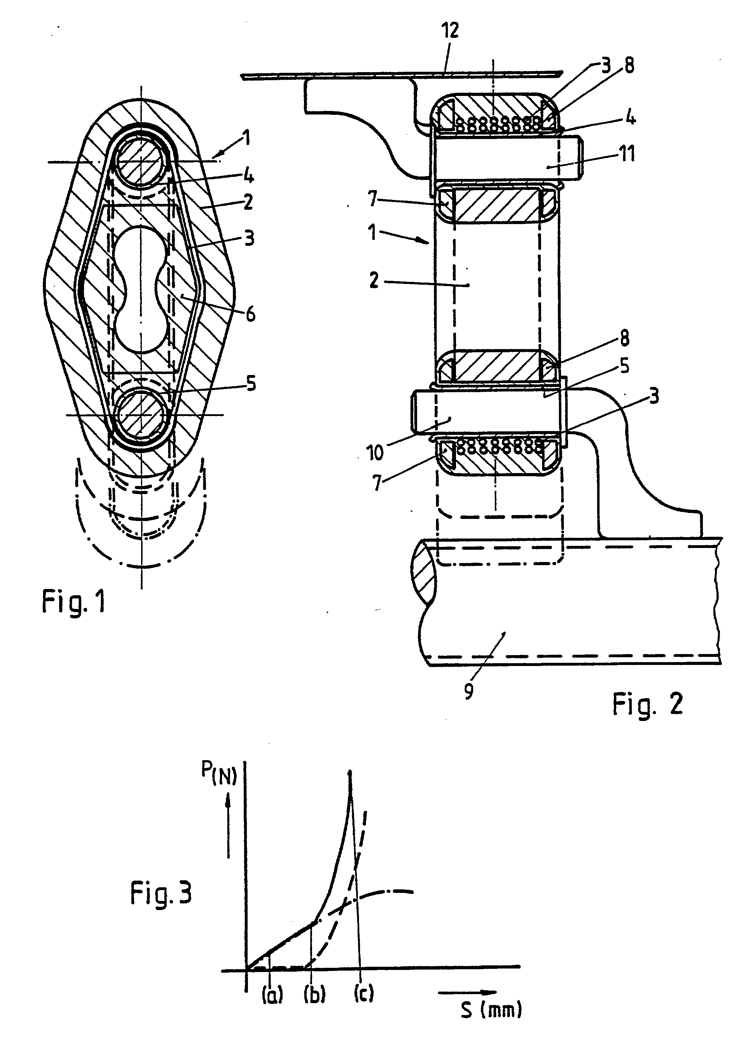

In den Figuren 1 und 2 ist eine Aufhängeöse 1 dargestellt, die als wesentliche Bestandteile einen Schlaufenkörper 2 aus Elastomerwerkstoff, insbesondere Gummi, aufweist, in dem eine Einlage 3 aus dehnfähigem, federnd-nachgiebigem Material angeordnet ist. Die Einlage 3 weist eine zumindest rhombusähnliche Ausgangsform auf und ist über zwei Buchsen 4 und 5 geschlungen, die in dem Schlaufenkörper 2 angeordnet bzw. eingebettet sind. Der Schlaufenkörper 2 kann aus mehreren Teilen bestehen und somit einen Rohelastomerkörper 6 sowie Seitendeckteile 7 und 8 aufweisen. Der Rohelastomerkörper 6 dient dazu, die Einlage 3 bei ihrer Herstellung in der aufgespreizten, rhombusähnlichen Ausgangsstellung zu fixieren, während das übrige Elastomermaterial, welches den Schlaufenkörper 2 bildet, in eine Spritzform eingespritzt wird. Die beiden Seitendeckteile 7 und 8 dienen dazu, die Einlage 3 symmetrisch zu der mittleren Schlaufenebene (Figur 2) in dem Schlaufenkörper 2 zu positionieren. Die Herstellung der Aufhängeöse 1 in einer Spritzform ist in einfacher Weise dadurch möglich, daß in diese Spritzform zunächst ein Seitendeckteil 7 eingelegt wird. Anschließend werden die Buchsen 4 und 5 lagestabil, beispielsweise auf in der Form angebrachte Stifte, aufgesteckt. Weiterhin wird die Einlage 3 über die Buchsen 4 und 5 gehängt und durch Einfügen des Rohelastomerkörpers 6 aufgespreizt. Schließlich wird das Seitendeckteil 8 aufgelegt und die Spritzform geschlossen. Es erfolgt dann das Einspritzen des Elastomerwerkstoffs. Als Elastomerwerkstoff kann insbesondere Gummi oder Kunststoff Verwendung finden. Im Fall von Gummi erfolgt eine Vulkanisation und damit eine Verbindung der Einzelteile in der Spritzform.

Die Zeichnungen der Figuren 1 und 2 zeigen den statischen Zustand und die dabei eingenommene Formgebung der Aufhängeöse 1, wenn eine Auspuffanlage, beispielsweise eine Leitung 9, mit Hilfe eines stiftförmigen Aufhängehakens 10 in die Aufhängeöse 1 eingesetzt ist, die ihrerseits in einen weiteren stiftförmigen Aufhängehaken 11, der in die Buchse 4 eingreift und am Boden 12 eines Kraftfahrzeugs dauerhaft befestigt ist, eingehängt ist. Die Aufhängeöse 1 ist dabei gegenüber ihrer unbelasteten Herstellungsgestaltung bereits etwas in die Länge gezogen bzw. deformiert, so, wie es in den Figuren 1 und 2 in durchgezogener Linienführung dargestellt ist. Diese Stellung entspricht der Stellung a in dem Kennliniendiagramm der Figur 3. Im Bereich kleiner Ausfederungen im Bereich der Leitung 9 nach unten deformiert sich der Schlaufenkörper 2 der Aufhängeöse 1, wobei zwar auch die Formgebung der Einlage 3 geändert wird. Die Einlage 3 weist jedoch keinen nennenswerten Biegewiderstand auf, so daß allein die Kennlinie durch die Rückstellkräfte in dem Schlaufenkörper 2 bestimmt wird, bis die gestreckte Lage der Einlage erreicht wird, die gestrichelt dargestellt ist. Diese Stellung b ist im Kennliniendiagramm der Figur 3 eingezeichnet. Im Bereich größerer Auffederungen wird schließlich die Endstellung c erreicht, die in den Figuren 1 und 2 strichpunktiert angedeutet ist.

Das Kennliniendiagramm gemäß Figur 3 zeigt die Federkraft über dem Federweg. In strichpunktierter Linie ist die Federkennlinie des Schlaufenkörpers 2 allein dargestellt. In gestrichelter Linie ist die Federkennlinie der Einlage 3 allein dargestellt. Die durchgezogene Linie zeigt die Addition dieser beiden Kennlinien, also die Kennlinie der gesamten Aufhängeöse 1. Es ist ersichtlich, daß die Einlage 3 im Bereich kleiner Auffederungen zwischen den Stellungen a und b keinen Wirkanteil herbeiführt, sondern im Gegenteil sicherstellt, daß hier allein der Schlaufenkörper 2 wirkungsmäßig zur Anwendung kommt. Ab dem Übergangsbereich der Stellung b bis hin zur maximalen Begrenzung der Auffederung gemäß Stellung c wirkt sich jedoch die sehr steile Kennlinie der Einlage 3 dahingehend aus, daß eine wesentlich progressiver als im Stand der Technik verlaufende Kennlinie erreicht wird. Die Einlage 3 besteht aus einem dehnfähigen, federnd-nachgiebigen Material, ist also selbst in sich elastisch und legt beim Einwirken von Zugkräften nennenswerte Federwege zurück. Aus Figur 3 ist ersichtlich, daß der Federweg der Einlage 3 etwa in der Größenordnung des zuvor durchlaufenen Federwegs des Schlaufenkörpers 2 liegt, oder anders gesagt, der gesamte Federweg des Schlaufenkörpers 2 steht im Verhältnis zum Federweg der Einlage etwa wie 2:1. Die Federwege des Schlaufenkörpers 2 und der Einlage 3 befinden sich in vergleichbaren Größenordnungen, d. h. die Einlage 3 ist nicht zugfest ausgebildet, sondern elastisch.

Bezugszeichenliste:

1 = Aufhängeöse
2 = Schlaufenkörper
3 = Einlage
4 = Buchse
5 = Buchse
6 = Rohelastomerkörper
7 = Seitendeckteil
8 = Seitendeckteil
9 = Leitung
10 = Aufhängehaken
11 = Aufhängehaken
12 = Boden

**Patentansprüche**

1. Zwei Aufhängepunkte aufweisende Aufhängeöse für eine Abgasanlage eines Kraftfahrzeugs, mit einem Schlaufenkörper aus Elastomerwerkstoff und einer in sich geschlossenen, in der Ebene des Schlaufenkörpers elastisch verformbaren Einlage, die eine zumindest rhombusähnliche Ausgangsform besitzt, dadurch gekennzeichnet, daß die Einlage (3) aus dehnfähigem, federnd-nachgiebigem Material besteht, daß in dem Schlaufenkörper (2) zwei Buchsen (4, 5) eingebettet sind, und daß sich die in dem Schlaufenkörper (2) angeordnete Einlage (3) unmittelbar an den Buchsen (4, 5) abstützt.

2. Aufhängeöse nach Anspruch 1, dadurch gekennzeichnet, daß die Einlage (3) aus einer insbesondere mehrlagigen Fadenschlinge besteht.

3. Aufhängeöse nach Anspruch 1 oder 2, dadurch gekennzeichnet, daß der Schlaufenkörper (2) und die Einlage (3) Federwege in ähnlicher Größenordnung aufweisen.

4. Aufhängeöse nach Anspruch 2, dadurch gekennzeichnet, daß die Fadenschlinge aus einem federnd-nachgiebig gemachten Faden aus natürlichen Stoffen, wie Baumwolle, Seide u. dgl. und/oder aus Kunststoff besteht.

5. Aufhängeöse nach Anspruch 1 bis 4, dadurch gekennzeichnet, daß sie als gespritzter Formkörper ausgebildet ist und eingelegte und umspritzte Rohelastomerstücke (6, 7, 8) aufweist.

6. Verfahren zur Herstellung einer zwei Aufhängepunkte aufweisenden Aufhängeöse nach den Ansprüchen 1 bis 5 mit einer Spritzform, dadurch gekennzeichnet, daß in die Spritzform zwei Buchsen (4, 5) lagestabil eingebracht werden, daß die Einlage (3) über die Buchsen (4, 5) gelegt und mit mindestens einem ebenfalls in die Spritzform einzulegenden Rohelastomerkörper (6) in die rhombusähnliche Ausgangsform aufgespreizt wird, und daß die eingelegten Teile mit Elastomerwerkstoff gespritzt werden.

7. Verfahren nach Anspruch 6, dadurch gekennzeichnet, daß zusätzlich Seitendeckteile (7, 8) aus Rohelastomerwerkstoff in die Spritzform eingelegt werden.

**Claims**

1. Suspension eye, having two suspension points, for an exhaust system of a motor vehicle, with a band of elastomer material and a self-contained insert, which is flexibly deformable in the plane of the band and has an at least rhombus-like initial shape, characterized in that the insert (3) consists of stretchable, resiliently compliant material, in that two bushes (4, 5) are embedded in the band (2), and in that the insert (3) arranged in the band (2) is supported directly on the bushes (4, 5).

2. Suspension eye according to claim 1, characterized in that the insert (3) consists of a thread loop, in particular a multi-layered thread loop.

3. Suspension eye according to claim 1 or 2, characterized in that the band (2) and the insert (3) have spring excursions of a similar order of magnitude.

4. Suspension eye according to claim 2, characterized in that the thread loop consists of a thread made resiliently compliant of natural materials, such as cotton, silk and the like and/or of plastic.

5. Suspension eye according to claims 1 to 4, characterized in that it is designed as an injection moulding and has pieces of raw elastomer (6, 7, 8), inserted and surrounded by injection moulding.

6. Process for producing a suspension eye having two suspension points according to claims 1 to 5 with an injection mould, characterized in that two bushes (4, 5) are introduced in stable positions into the injection mould, in that the insert (3) is placed over the bushes (4, 5) and spread out with a raw elastomer element (6), likewise to be inserted in the injection mould, into the rhombus-like initial shape, and in that the inserted parts are injection-moulded with elastomer material.

7. Process according to claim 6, characterized in that side covering parts (7, 8) of raw elastomer material are additionally inserted in the injection mould.

## Revendications

1. Anneau de support présentant deux points de support destiné à un dispositif d'échappement de véhicule automobile, comportant un corps en forme de boucle réalisé en matériau élastomère et un insert fermé sur lui-même, élastiquement déformable dans le plan du corps en forme de boucle, qui est doté au moins au départ d'une forme analogue à un losange, caractérisé par le fait que l'insert (3) est constitué par un matériau extensible apte à se déformer élastiquement, que deux manchons (4, 5) sont incorporés dans le corps en forme de boucle (2) et que l'insert (3) disposé dans le corps en forme de boucle (2), s'appuie directement sur les deux manchons (4, 5).

2. Anneau de support selon la revendication 1, caractérisé par le fait que l'insert (3) est constitué par une boucle de fil comportant plusieurs couches.

3. Anneau de support selon la revendication 1 ou 2, caractérisé par le fait que le corps en forme de boucle (2) et l'insert (3) présentent des courses élastiques du même ordre de grandeur.

4. Anneau de support selon la revendication 2, caractérisé par le fait que la boucle de fil est constituée par des fils agencés de manière à se déformer élastiquement, en matières naturelles telles que le coton, la soie ou des matières similaires et/ou en matière de synthèse.

5. Anneau de support selon les revendications 1 à 4, caractérisé par le fait qu'il est constitué par un corps moulé par injection et qu'il présente des pièces brutes en élastomère (6, 7, 8) qui ont été mises en place et autour desquelles est réalisée l'injection.

6. Procédé de fabrication d'un anneau de support présentant deux points de support selon les revendications 1 à 5, au moyen d'un moule d'injection, caractérisé par le fait que deux manchons (4, 5) sont mis en place dans le moule d'injection de façon telle que leur position soit stable, que l'insert (3) est placé sur les manchons (4, 5) et est écarté dans sa forme initiale analogue à un losange, au moyen d'au moins un corps brut (6) en élastomère mis en place dans le moule d'injection, et que les pièces qui ont été mises en place sont soumises à une injection de matériau élastomère.

7. Procédé selon la revendication 6, caractérisé par le fait qu'en plus on met en place dans le moule des pièces de recouvrement latéral (7, 8), en matériau élastomère.

Fig. 1

Fig. 2

Fig. 3